# EUROPEAN PATENT APPLICATION

(11) **EP 2 790 149 A1**
(43) Date of publication of application: **15.10.2014**
(21) Application number: 12854927.6
(22) Date of filing: 05.12.2012
(51) Int. Cl.: G06Q 50/10

(54) **SYSTEM, METHOD, AND COMPUTER-READABLE RECORDING MEDIUM FOR PROVIDING DUAL MODE WEAPONS IN AN ONLINE FIRST PERSON SHOOTER GAME**

(30) Priority: 05.12.2011 KR 20110128831
(71) Applicant: Redduck Inc., Seoul 135-873 (KR)
(72) Inventor: NOH, Seung Han, Namyangju-si Gyeonggi-do 472-943 (KR); SUNG, Nak Ho, Seoul 135-090 (KR); OH, Dong Soo, Seoul 156-050 (KR)
(74) Representative: Beetz & Partner
(86) International application number: PCT/KR2012/010460
(87) International publication number: WO 2013/085268

(57) **Abstract**

The present invention includes a game contents server that provides a plurality of users connected through an internet network with the contents of an online first personal shooter game, in which the game contents server includes a dual processing module that provides the uses two or more weapons of a plurality of weapons in the process of a mission of the game, holds two weapons selected by the users to the left side and the right side, respectively, determines new one characteristic parameter by combining a characteristic parameter of the weapon at the left side and a characteristic parameter of the weapon at the right side, and applies the determined new one characteristic parameter to setting a target.

## Description

### BACKGROUND OF THE INVENTION

### 1. FIELD OF THE INVENTION

The present invention relates to a system for providing an online game service, and more particularly, to a system, a method, and a computer-readable recording medium for providing a dual mode weapon in an online first personal shooter game.

### 2. Description of the Related Art

A culture industry associated with movies, cartoons, and games is in the spotlight as the major industry in 21st century. A game industry of the culture industry, which is the latest high value-added intellectual complex industry, will be developed as the main industry in the age of coming 21st cultural tourism industry.

A network game using the internet is the main current in the genre of the presently popular games. Such a tendency is caused by the relatively short lifespan of games because there is necessarily a limit to the number of cases of the PC's reactions in single user games for competing with a PC and the PC's reactions can be expected accordingly, when a predetermined time has passed. In contrast, in the games for playing with other users in online through a network, the reactions against the opposite's actions are almost infinite in accordance with the play types of the entrants of the games, so the users of the games can be provided with enjoyment in more various ways. For this reason, almost all games are being developed as multi-user games using a network and it has been made possible by the construction of high speed networks throughout the society, such as a PC bang (internet cafe), a cyber apartment, and a personal internet exclusive line, and by the rapid development of personal computers.

In game scenarios, such as in a board game in which a series of rules are determined and a gamer plays the game under the fixed rules, there is a scenario for an RPG (Role Playing Game) in which a gamer makes a story while increasing his/her character by performing the role, using the character in a specific space-time such as a novel or a drama.

Further, there is a first personal shooter game (hereafter, referred to as an 'FPS' game') that is a competition game played through the visual points of characters in the game and users play the game, aiming and firing with various weapons and limited ammunition. The current FPS genre has been started at the early 1990s and from which computers being able to draw basic 3D graphics in real time started to come out.

FPS games that are recently put on the market allow for interactions of background objects to implement more real battle scenes and are supported with many functions to provide users with fitting feeling in various ways.

Further, the guns used in games are based on actual guns and the specifications of the guns are fully reflected in the games to achieve games closer to the reality. Users can purchase various guns used in the FPS games, using points obtained during the game, or exchange them to use them.

In actual battles, the performance of guns is improved by reforming them or attaching accessories (for example, a scope or a mount) to them, even through they are the same.

On the other hand, as a technology relating to gun control in the FPS games, there were disclosed a system and a method of customizing a weapon on the online first personal shooting game, in Korean Patent Publication No. 10-0822839, titled "System and method of customizing a weapon on the online first personal shooting game" (Redduck, Inc.) (Document 1), which can improve the performance of guns by attaching custom parts to the guns in a first personal shooting game.

However, all of the weapons used in the FPS games of the related art, including Document 1, can only be used with both hands or held with a specific hand. In the actual shooting environment, however, the guns may be held in different direction, depending on each person, or they may be held in only one direction, depending on the design or characteristics of the guns.

Accordingly, there is a need of a method that allows for simultaneous use of guns in both hands in consideration of the holding direction of weapons, including guns, in order to increase enjoyment and reality of the games.

### [Prior Art Document]

[Patent Document] Korean Patent Publication No. 10-0822839, titled "System and method of customizing a weapon on the online first personal shooting game" (Redduck, Inc.), April 4, 2008.

### SUMMARY OF THE INVENTION

An object of the present invention is to provide a system and a method for providing a dual mode weapon in an online first personal shooter game which enable use of a weapon in a dual mode in an FPS game.

Another object of the present invention is to provide a system and a method for providing a dual mode weapon in an online first personal shooter game which enable use of a weapon in a dual mode and can increase reality by displaying targets with new parameters set in accordance with combinations of weapons and by regulating accuracy, in an FPS game.

Another object of the present invention is to provide system and a method for providing a dual mode weapon in an online first personal shooter game which enable use of a weapon in a dual mode and can increase reality by displaying targets and regulating accuracy in continuous firing, in an FPS game.

Characterized configurations of the present invention for achieving the objects of the present invention and peculiar effects of the present invention are as follows.

According to an aspect of the present invention, a system for providing a dual mode weapon in an online first personal shooter game, which is a system that provides an online first personal shooter game in which a plurality of users participates through their computer terminal that can connect to the internet, includes a game contents server that provides the users connected through an internet network with the contents of the online first personal shooter game, in which the game contents server includes a dual mode processing module that provides the users with two or more weapons of a plurality of weapons in the process of a mission of the game, holds two weapons selected by the users to the left side and the right side, respectively, determines new one characteristic parameter by combining a characteristic parameter of the weapon at the left side and a characteristic parameter of the weapon at the right side, and applies the determined new one characteristic parameter to setting of a target.

Preferably, the weapons are guns or shields.

Preferably, the new one characteristic parameter is determined with reference to a matching information database keeping parameter values matched in accordance with combinations of the parameters of the weapons.

Preferably, the weapons are stored in one inventory region of a left-only inventory region and a right-only inventory region in a plurality of inventory regions created for each user.

Preferably, the weapon at the left side and the weapon at the right side can be swapped with each other.

Preferably, when the characteristic parameter value is a parameter associated with the accuracy of a gun, the accuracy by the new characteristic parameter is lower than the accuracy by the characteristic parameters of the weapons.

Preferably, when the accuracy is low, the display region of the target increases.

Preferably, the dual mode processing module applies a weighing value to the characteristic parameter value, when the user continuously fires with the loaded weapons.

According to another aspect of the present invention, a method of providing a dual mode weapon in an online first personal shooter game, which is a method that provides an online first personal shooter game provided by a provider in which a plurality of users participates through their computer terminal that can connect to the internet, includes: providing the users connected through an internet network with the contents of the online first personal shooter game through a game contents server; providing the users with two or more weapons of a plurality of weapons in the process of a mission of the game through a dual mode processing module of the game contents server; holding two weapons selected by the users to the left side and the right side, respectively, through the dual mode processing module of the game contents server; determining new one characteristic parameter by combining a characteristic parameter of the weapon at the left side with a characteristic parameter of the weapon at the right side, through the dual mode processing module of thee game contents server; and applying the determined new one characteristic parameter to setting of a target through the dual mode processing module of the game contents server.

On the other hand, information for receiving the method of providing a dual mode weapon in an online first personal shooter game may be stored in a recording medium that can be read by a server computer. The recording medium includes all kinds of recording media that stores computer-readable programs and data through computer systems. For example, the recording medium includes ROM (Read Only Memory), RAM (Random Access Memory), CD (Compact Disk), DVD (Digital Video Disk)-ROM, magnetic tape, floppy disk, and optical data storage, and also includes those in the type of carrier wave (for example, transmission through the internet). Further, the recording medium can store and execute codes that are distributed to computer system connected through a network and can be read by the computers in distribution type.

As described above, according to the present invention, it is possible to use weapons in a dual mode in an FPS game and increase reality by displaying a target and adjusting accuracy on the basis of new parameters set in accordance with combinations of the weapons in the dual mode.

Further, it is possible to further increase reality in an FPS game by reducing the accuracy and increasing the difficulty, by enlarging a target in continuous firing.

Further, it is possible to make a user further concentrate on the game by providing a realistic use environment in relation to exchange, acquisition, and release of weapons, when using the weapons in a dual mode in an FPS game.

Further, in the operation in the dual mode, by not simultaneously using the parameter values of the guns, but matching and using new one parameter value, it is possible to use less resource for keeping the game played and quickly apply the resources to dual guns.

### BRIEF DESCRIPTION OF THE DRAWINGS

FIG. 1 is a diagram illustrating a system for providing a dual mode weapon in an online first personal shooter game according to the present invention.
FIG. 2 is a diagram illustrating a detailed configuration of a dual mode processing module in a game contents server according to an embodiment of the present invention.
FIG. 3 is a diagram illustrating the data field of a member information database according to an embodiment of the present invention.
FIG. 4 is a diagram illustrating the data field of a weapon information database according to an embodiment of the present invention.
FIG. 5 is a flowchart illustrating a process of providing a dual mode weapon in an online first personal shooter game according to an embodiment of the present invention.
FIG. 6 is a schematic view of a game image provided with a dual mode weapon composed of the same weapons according to an embodiment of the present invention.
FIG. 7 is a schematic view of a game image provided with a dual mode weapon composed of different weapons according to an embodiment of the present invention.
FIG. 8 is a schematic view of a game image with weapons swapped in the dual mode according to an embodiment of the present invention.
FIGS 9 and 10 are schematic view of a game image with a shield mode executed in the dual mode according to an embodiment of the present invention.

### DETAILED DESCRIPTION OF THE PREFERRED EMBODIMENTS

The following detailed description of the present invention provides specific embodiments for achieving the present invention and refers to the accompanying drawings. The embodiments will be described in detail to be enough for those skilled in the art to achieve the present invention. It should be understood that the embodiments of the present invention are different, but not necessarily exclusive to each other. For example, specific shapes, structures, and characteristics described herein may be implemented by other embodiments without departing from the scope and spirit of the present invention in association with an embodiment. Further, it should be understood that the positions and arrangements of the components in the embodiments described herein may be changed without departing from the scope and the spirit of the present invention. Accordingly, the following detailed description is not limitative, but is limited only the claims, including those equivalents to the claims, as long as the scope of the present invention is appropriately described. Like reference numerals indicate the same or similar functions in various respects in the drawings.

The present invention provides a system and a method for providing a dual mode weapon in an online first personal shooter game which enable use of a weapon in a dual mode in an FPS game. In particular, in the present invention, because targets are displayed by new parameters set in accordance with combinations of weapons and accuracy is regulated when the weapons are used in a dual mode in an FPS game, the weapons are not operated in accordance with their performance, but new types of weapon performance by combinations can be achieved.

Further, when a weapon is loaded as not a gun, but a shield in accordance with an embodiment of the present invention, a specific new target display method can be used in accordance with new parameters. On the other hand, guns are kept and managed in inventories each designated to users, in which the inventories are divided into a right inventory and a left inventory in accordance with embodiments of the present invention and the guns that users purchased or obtained can be separately kept in the right inventory or the left inventory. Accordingly, when loading guns, users can hold the guns at the sides of the inventories.

Embodiments of the present invention will be described in detail below with reference to the accompanying drawings in order for those skilled in the art to be able to easily implement the present invention.

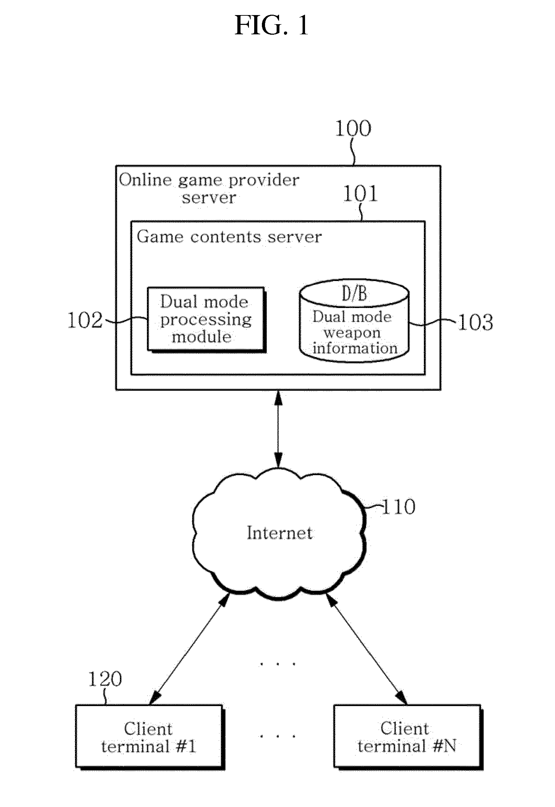

First, the configurations of a system and a device for customizing weapons in an online first personal shooter game according to the present invention are described with reference to FIGS. 1 to 4.

FIG. 1 is a diagram illustrating a system for providing a dual mode weapon in an online first personal shooter game according to the present invention.

Referring to FIG. 1, a system for providing a dual mode weapon in an online a first personal shooter game according to the present invention may include an online game provider server 100, an internet network 110, and a plurality of client terminals 120, in which the online game provider server 100 may include a game contents server 101 and the game contents server 101 may include a dual mode processing module 102 and a dual mode weapon information database 103.

A plurality of users connects to the online game provider server 100 of the provider through the internet network 110, using their client terminals 120, and particularly, they can execute an online game provided by the provider on their terminal by connecting to the game contents server 101.

As described above, the online game provided from the game contents server 101 is an FPS game, which is a team play type game in which a plurality of users competes with each other. The game contents server 101 can provide various missions and maps to be selected in playing a game. Further, the present states and records of the users are managed during the game and it is preferable to configure the system to make users have to join and log in the game provided from the game contents server 101 in order to play the game.

That is, it is preferable that the FPS game has various missions and maps such that a plurality of clients each participates as a character and cooperates with each other for one mission. Accordingly, the game contents server 101 may be composed of various devices that provide various interfaces for providing an online connection environment to clients and various missions and maps for playing a game.

Each of the clients 120 uses one or more weapons and is basically provided with one gun in the FPS game. Further, the clients can purchase new guns, using points (money) that they obtained during a game or purchased at predetermined values and can use weapons in a dual mode in which two weapons are simultaneously used in accordance with the present invention.

Accordingly, the use of weapons in a dual mode by the clients 120 playing the online game provided through the game contents server 101 of the online game provider server 100 is managed and implemented by the dual mode processing module 102.

The dual mode processing module 102, which is a module that enables various weapons to be used in a dual mode in accordance with the present invention, is included in the online game provider server 100 and substantially implemented in the type of a program in online game software made by the provider. The dual mode processing module 102 may be implemented as a separate device, but is usually included in the game contents server 101. That is, when game contents are made in the type of a program, there is included a program code for using and managing the dual mode weapons.

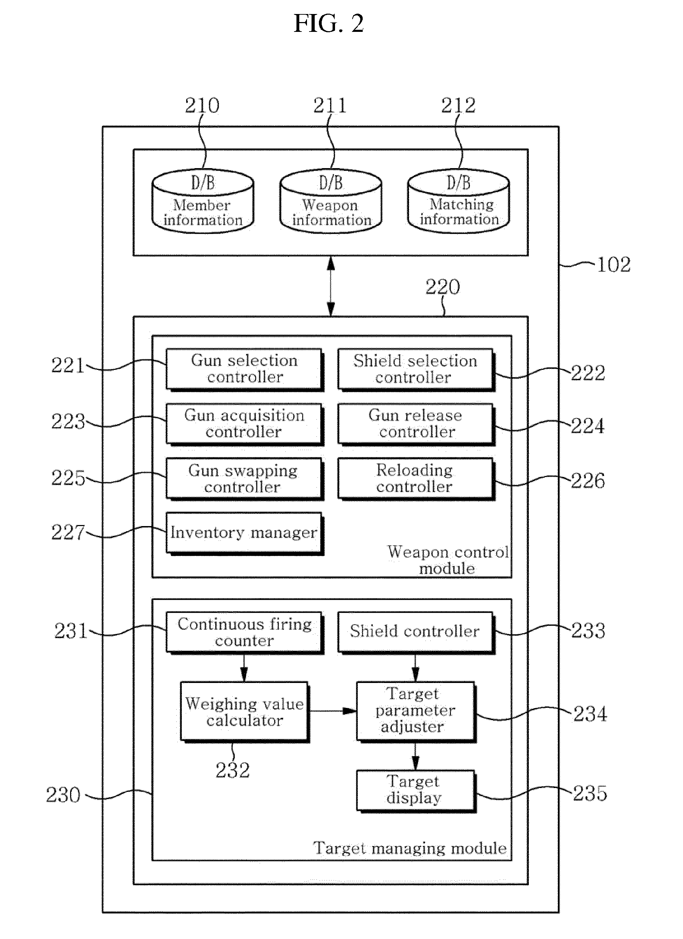

FIG. 2 is a diagram illustrating a detailed configuration of a dual mode processing module in a game contents server according to an embodiment of the present invention.

Referring to FIG. 2, the dual mode processing module 102 according to an embodiment of the present invention may include a weapon control module 220 and a target managing module 230. The weapon control module 220 may include a gun selection controller 221, a shield selection controller 222, a gun acquisition controller 223, a gun release controller 224, a gun swapping controller 225, a reloading controller 226, and an inventory manager 227, or the like. Further, the target managing module 230 may include a continuous firing counter 231, a weighing value calculator 232, a shield controller 233, a target parameter adjuster 234, and a target display 235, or the like.

The modules can read out information from or put information to at least one database such as a member information database 210, a weapon information database 211, and a matching information database 212.

The gun selection controller 221 performs a function of holding a gun selected from at least one gun stored in inventories by each user (that is, character) at the beginning of a game or during a game. It is preferable that the users join, log in, and play the game when they perform the game, and log-in information of the members is stored in the member information database 210. A new member of the game may be basically provided with an identical gun and can purchase new guns in process of the game.

The gun selection controller 221 controls the inventory manager 227 so that specific guns in the inventories can be selected and held. According to an embodiment of the present invention, the guns are kept in the right inventory or the left inventory and used in accordance with the corresponding inventories. That is, it is preferable that the weapons in the left inventory can be held only in the left hand and the weapons in the right inventory can be held only in the right hand.

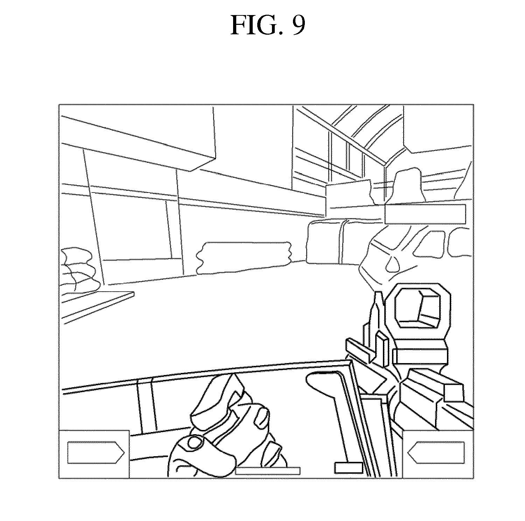

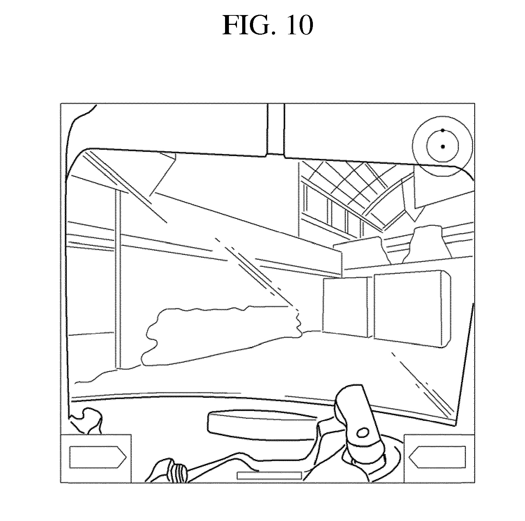

The shield selection controller 222 performs control such that not only the guns, but the shields in the inventories, as illustrated in FIGS. 9 and 10, are selected. In particular, selection of the shields may change the performance of the current loaded weapons (for example, a gun) by the method described below, and the way and accuracy of target display for the target point are controlled to be changed.

The gun acquisition controller 223 performs control such that guns dropped to the ground can be acquired in a game, in which when the holding side of the gun is set, it is preferable to enable a user to acquire the gun only when the user can held it at the holding direction. The gun release controller 224 performs control so that guns are released by dropping the gun held now at the left side or the right side to the ground or re-storing it to an inventory. According to an embodiment of the present invention, when a gun to be released is a gun that is set to be able to be held only at a specific side and there is a storage space in the corresponding inventory (that is, the left-only inventory for a left hand-only gun, and vice versa), the gun can be stored only in the corresponding inventory.

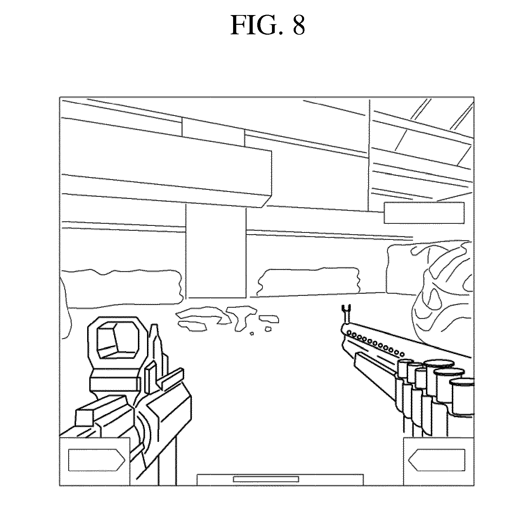

The gun swapping controller 235, as illustrated in FIG. 8, performs control such that the gun in the left hand and the gun in the right hand can be swapped each other. It is preferable that the guns to be swapped are not guns that can be held only at specific sides, but guns that can be held at both sides. When a user selects gun-swapping, the gun in the left hand and the gun in the right hand are controlled to be swapped with each other by the gun swapping controller 235.

According to an embodiment of the present invention, the performance and parameters of the whole guns may be changed by the swapping. That is, the general weapon characteristics when a first gun is held at the left side and a second gun is held at the right side may be changed to be different from the general weapon characteristics when the first gun is held at the right side and the second gun is held at the left side. For example, specific parameters, including the accuracy, may be better in the latter and other parameters such as easiness of control may be better in the former. Accordingly, users can more effectively play the game by swapping guns in consideration of the situation of the game and their operation technique, even if they use identical guns in the dual mode.

The reloading controller 226 controls reload of bullets on guns, when the guns are loaded in the dual mode. The guns (for example, the gun held at the left side and the gun held at the right side) may be separately reloaded or the guns held at both sides may be simultaneously reloaded in accordance with an embodiment of the present invention.

It is preferable the inventory manager 227 is managed in a plurality of inventory regions, as described above, and manages the weapons such that the weapons that can be held at the left side are stored in the left-only inventory and the weapons that can be held at the right side are stored in the right-only inventory in accordance with an embodiment of the present invention.

When operating in the dual mode in accordance with an embodiment of the present invention, the target managing module 230 performs processing to provide targets different from the targets in a single mode (that is, when only one gun is held). That is, when operating in the dual mode, it does not simultaneously display the targets of separate guns, but displays targets on the basis of new mapped parameters with reference to the matching information database 212 with the parameters of the guns combined and mapped.

In more detail, the target parameter adjuster 234 adjusts the parameters of two presently loaded guns due to the dual mode into new combined parameters by referring to the matching table kept in the matching information data base 212. For example, when the parameter value of the first characteristic (for example, accuracy) of the first gun held at the left side is the first parameter value and the parameter value of the first characteristic of the second gun held at the right side is the second parameter value, it is possible to set the third parameter value with reference to combinations of the first characteristics of the two guns in the matching table.

As described above, in the operation in the dual mode, by not simultaneously using the parameter values of the guns, but matching and using new one parameter value, it is possible to use less resource for keeping the game played and quickly apply the resources to dual guns.

When the target parameter adjuster 234 determines a new target parameter value, the target display 235 displays the target on the basis of the calculated target parameter value. For example, when the accuracy in the target parameter values decreases, the range of the target increases and the user has difficulty in operating it.

In continuous firing according to an embodiment of the present invention, the range of the target may be changed due to a change in target parameters. That is, the continuous firing counter 231 counts the number of continuous firing for a predetermined time and provides it to the weighing value calculator 232 and the weighing value calculator 232 calculates a weighing value to apply to the target parameters on the basis of the counted value. As another way, when the corresponding gun is a gun that can be set in a continuous firing mode, the firing accuracy is decreased and operation is made difficult by changing the weighing value in setting of the corresponding mode.

Similar to the above description, when a user holds a shield at one side in the dual mode, the shield controller 233 provides parameter values of the shield to the target parameter adjuster 234 and the target parameter adjuster 234 checks combination values of the parameters of the shield and the presently held guns from the matching information database 212 and applies them.

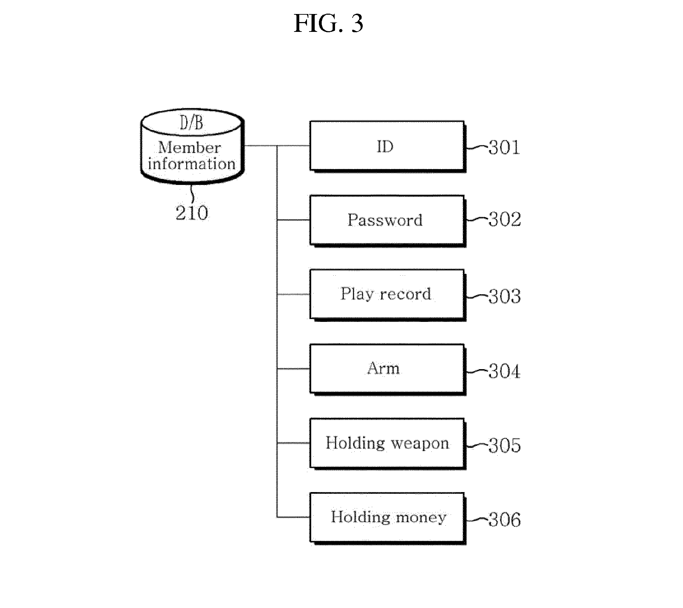

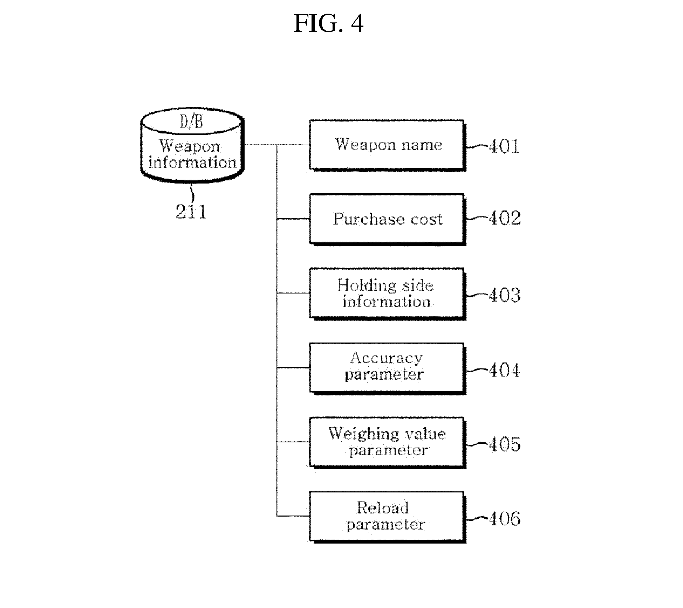

Various databases for weapon customizing according to the present invention are described hereafter with reference to FIGS. 3 and 4.

FIG. 3 is a diagram illustrating the data field of a member information database according to an embodiment of the present invention.

Referring to FIG. 3, the member information database 210 according to an embodiment of the present invention preferably include data fields such as an ID 301, a password 302, a play record 303, an arm 304, a holding weapon 305, and a holding money 306. The information of the ID 301 and the password 302 is information for authenticating the members and the information of the play record 303 is information of the number of game play time or the level of experience of the members. The information of the arm 304 means the branch of the arm in the games selected by users and different guns may be supplied in accordance with the arm. The holding weapon 305 keeps various items of information about the guns that the members are initially received or newly purchase, or the guns for the dual mode.

FIG. 4 is a diagram illustrating the data field of a weapon information database according to an embodiment of the present invention.

Referring to FIG. 4, the weapon information database 211 according to an embodiment of the present invention preferably includes data fields such as a weapon name 401, a purchase cost 402, a holding side information 403, a accuracy parameter 404, a weighing value parameter 405, and a reload parameter 406.

The weapon name 401 represents the basic name of weapons and the purchase cost 402 is point (game money) information that is consumed to purchase corresponding weapons. Further, the holding side information 403 keeps the information of the sides where corresponding weapons can be held (for example, left-only, right-only, and both-available). The accuracy parameter 404 and the weighing parameter 405 keep the parameter values of guns that are used when the dual mode is executed in accordance with an embodiment of the present invention, as described above. The reload parameter 406 keeps parameter values that are used when guns are reloaded for the dual mode.

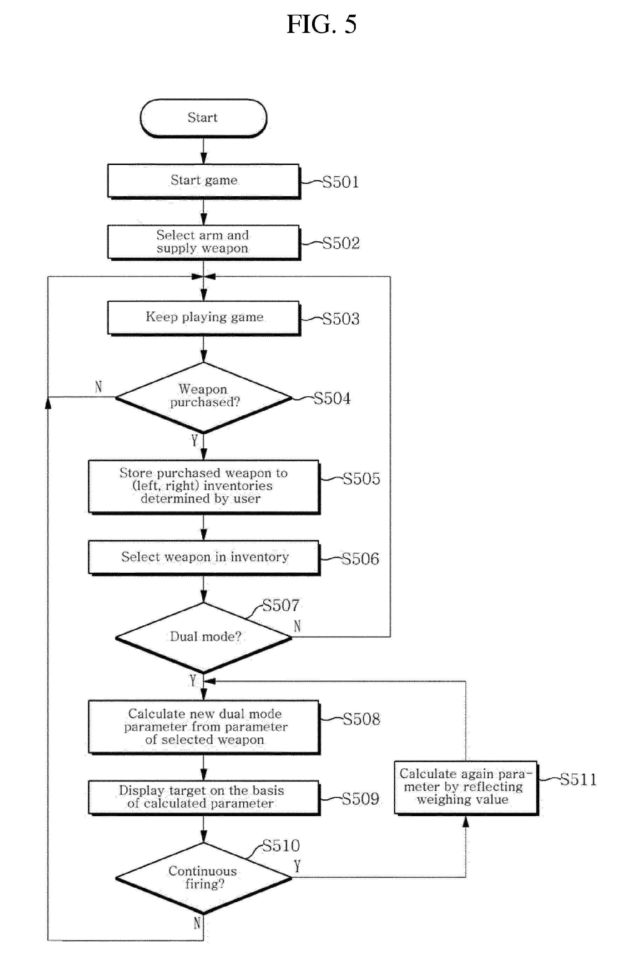

FIG. 5 is a flowchart illustrating a process of weapon customizing in an online first personal shooter game according to an embodiment of the present invention.

Referring to FIG. 5, first, a user connects to and log in the game server of the provider, enters a corresponding mission of a first personal shooter game (that is, an FPS game), and select a map to play with. Then, when the game starts (S501), the user selects the arm for the character and receives basic weapons (that is, guns, and the like.) (S502).

When the user wants to purchase a new weapon (S504) in process of the game (S503), the user enters a character store and purchases a weapon from displayed various purchasable guns by giving the corresponding game money. The weapon purchased in accordance with an embodiment of the present invention is stored in the left inventory or the right inventory of the user's inventories (S505).

When the user selects a weapon kept in a specific inventory (S506), the selected weapon is loaded, and when weapons are loaded at both of the left and right sides, they operate in the dual mode in accordance with an embodiment of the present invention.

That is, the parameter values of a new dual mode are calculated from the parameter values of the selected weapons by the matching table (S508). The target display way or the target display region is determined on the basis of the new calculated parameter values, so a target is displayed in the determined target display way (S509).

When the user uses the loaded gun in a continuous firing mode or continuously fires (S510), as described above, a weighing value is calculated on the basis of it and new parameter values are calculated again by reflecting the calculated weighing value to the parameter values (S511).

Therefore, it is possible to more effectively and realistically apply a dual mode in an FPS game and quickly use dual guns even using less resource.

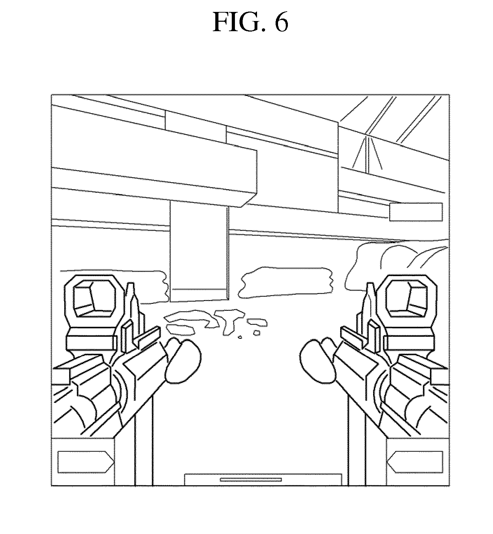

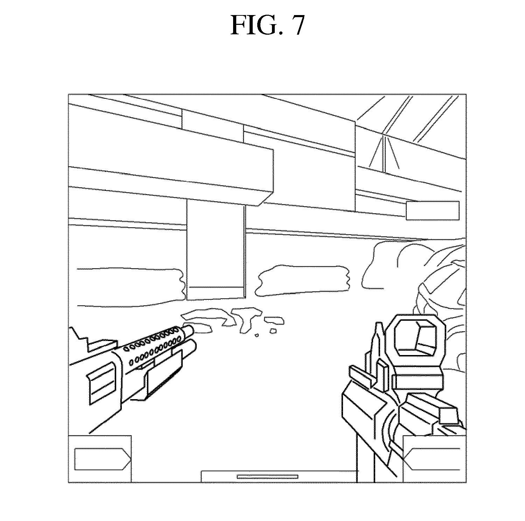

Schematic views of game images where the present invention is actually applied are described hereafter with reference to FIGS. 6 to 10. FIG. 6 is a schematic view of a game image provided with a dual mode weapon composed of same weapons according to an embodiment of the present invention and FIG. 7 is a schematic view of a game image provided with a dual mode weapon composed of different weapons according to an embodiment of the present invention.

That is, it is possible to execute a dual mode with identical guns or different guns simultaneously at both sides in the present invention. As illustrated in the figures, the targets of guns are not separately displayed on the objects, but targets changed by new calculated parameter values are displayed.

FIG. 8 is a schematic view of a game image with weapons swapped in the dual mode according to an embodiment of the present invention. Referring to FIG. 8, when different guns are held in a dual mode, as in FIG. 7, the guns at both sides may be swapped with each other.

FIGS 9 and 10 are schematic view of a game image with a shield mode executed in the dual mode according to an embodiment of the present invention. Referring to FIGS. 9 and 10, it is possible to select a shield at one side and a gun at the other side in accordance with an embodiment of the present invention, in which the target of the corresponding gun may be recalculated and displayed as a new target in consideration of the held shield.

Embodiments of the present invention can be achieved in the types of program commands that can be executed by various computers, and can be recorded on computer-readable media. The computer-readable media may include program commands, data files, and data structures of combinations thereof. The program command that are recorded on the media may be those specifically designed and configure for the present invention or may be those available and known those engaged in computer software in the art. The computer-readable recording media include magnetic media such as hard disk, floppy disk, and magnetic tape, optical media such as CD-ROM and DVD, magneto-optical media such as floptical disk, and hardware devices specifically configured to store and execute program commands, such as ROM, RAM, and flash memory. The program commands include not only mechanical languages made by a compiler, but high-class language codes that can be executed by a computer using an interpreter. The hardware device may be configured to operate as one or more software modules to perform the operation of the present invention, and vice versa.

Hereinabove, although the present invention is described by specific matters such as concrete components, and the like, embodiments, and drawings, they are provided only for assisting in the entire understanding of the present invention. Therefore, the present invention is not limited to the embodiments. Various modifications and changes may be made by those skilled in the art to which the present invention pertains from this description.

Therefore, the sprit of the present invention should not be limited to the above-described embodiments, and the following claims as well as all modified equally or equivalently to the claims are intended to fall within the scope and spirit of the invention.

## Claims

1. A system for providing a dual mode weapon in an online first personal shooter game, which provides an online first personal shooter game provided by a provider in which a plurality of users participates through their computer terminal that can connect to the internet, the system comprising a game contents server that provides the users connected through an internet network with the contents of the online first personal shooter game,
wherein the game contents server includes a dual mode processing module that provides the users with two or more weapons of a plurality of weapons in the process of a mission of the game, holds two weapons selected by the users to the left side and the right side, respectively, determines new one characteristic parameter by combining a characteristic parameter of the weapon at the left side and a characteristic parameter of the weapon at the right side, and applies the determined new one characteristic parameter to setting of a target.

2. The system of claim 1, wherein the weapons are guns or shields.

3. The system of claim 1, wherein the new one characteristic parameter is determined with reference to a matching information database keeping parameter values matched in accordance with combinations of the parameters of the weapons.

4. The system of claim 1, wherein the weapons are stored in one inventory region of a left-only inventory region and a right-only inventory region in a plurality of inventory regions created for each user.

5. The system of claim 1, wherein the weapon at the left side and the weapon at the right side can be swapped with each other.

6. The system of claim 1, wherein when the characteristic parameter value is a parameter associated with the accuracy of a gun, the accuracy by the new characteristic parameter is lower than the accuracy by the characteristic parameters of the weapons.

7. The system of claim 6, wherein when the accuracy is low, the display region of the target increases.

8. The system of claim 1, wherein the dual mode processing module applies a weighing value to the characteristic parameter value, when the user continuously fires with the loaded weapons.

9. A method of providing a dual mode weapon in an online first personal shooter game, which provides an online first personal shooter game provided by a provider in which a plurality of users participates through their computer terminal that can connect to the internet, the method comprising:
providing the users connected through an internet network with the contents of the online first personal shooter game through a game contents server;
providing the users with two or more weapons of a plurality of weapons in the process of a mission of the game through a dual mode processing module of the game contents server;
holding two weapons selected by the users to the left side and the right side, respectively, through the dual mode processing module of the game contents server;
determining new one characteristic parameter by combining a characteristic parameter of the weapon at the left side with a characteristic parameter of the weapon at the right side, through the dual mode processing module of thee game contents server; and
applying the determined new one characteristic parameter to setting of a target through the dual mode processing module of the game contents server.

10. The method of claim 9, wherein the weapons are guns or shields.

11. The method of claim 9, wherein the new one characteristic parameter is determined with reference to a matching information database keeping parameter values matched in accordance with combinations of the parameters of the weapons.

12. The method of claim 9, wherein the weapons are stored in one inventory region of a left-only inventory region and a right-only inventory region in a plurality of inventory regions created for each user.

13. The method of claim 9, wherein the weapon at the left side and the weapon at the right side can be swapped with each other.

14. The method of claim 9, wherein when the characteristic parameter value is a parameter associated with the accuracy of a gun, the accuracy by the new characteristic parameter is lower than the accuracy by the characteristic parameters of the weapons.

15. The method of claim 14, wherein when the accuracy is low, the display region of the target increases.

16. The method of claim 9, wherein the dual mode processing module applies a weighing value to the characteristic parameter value, when the user continuously fires with the loaded weapons.

17. A computer-readable medium where programs for performing the method of any one of claims 9 to 16 are recorded.
